# EUROPEAN PATENT SPECIFICATION

(11) **EP 1 304 033 B1**
(45) Date of publication and mention of the grant of the patent: **28.06.2006**
(21) Application number: 02394095.0
(22) Date of filing: 20.09.2002
(51) Int. Cl.: A01K 89/015

(54) **Bait casting reel**
Angelwinde zum Werfen von Ködern
Moulinet de lancement d'appât

(30) Priority: 19.10.2001 JP 2001321593
(43) Date of publication of application: 23.04.2003
(73) Proprietor: SHIMANO INC., Sakai-shi, Osaka 590-8577 (JP)
(72) Inventor: Myojo, Seiji, Osaka 590-0133 (JP)
(74) Representative: Murnane, Graham John

(56) References cited:
- US-A- 4 905 930
- US-A- 5 377 925
- US-A- 5 855 331
- PATENT ABSTRACTS OF JAPAN vol. 1998, no. 01, 30 January 1998 (1998-01-30) & JP 09 252692 A (DAIWA SEIKO INC), 30 September 1997 (1997-09-30)

## Description

1. This invention generally relates to double bearing reels. More specifically, the present invention relates to so-called bait casting reels utilized for bait casting. A similar bait casting double-bearing real is already disclosed by US-A-5377925.
2. A so-called bait casting reel generally includes a reel body, which freely allows reeling-out and winding of the fishing line, and a handle for performing a winding operation of the fishing line.

The reel body includes a main frame, which accommodates a spool for winding the fishing line, a spool driving mechanism for rotating the spool, a drag mechanism for restricting the reeling out of the fishing line, and a level winding mechanism for winding the fishing line uniformly on the spool while the fishing line is wound. The spool driving mechanism is formed such that a handle can be coupled thereto. The handle is disposed on a position that projects outward from the reel body, in order to allow easy operation of the handle.

In a conventional bait casting reel, a sub frame is attached to the aforementioned main frame. This sub frame forms an outer plate, in other words the surface of the bait casting reel. The main frame and the sub frame are coupled together. The spool, the spool driving mechanism, the level winding mechanism, and the handle are positioned relative to and supported by the main frame and sub frame together, such that the bait casting reel functions as a whole.

Due to such structure of the bait casting reel, the design of the sub frame needs to take into consideration the following requirements. First of all, a portion of the sub frame that supports the spool has to be shaped so as to have enough strength to support the spool. Also, the position of the spool-support portion has to be determined based on the position of the spool. Furthermore, a portion that supports the handle has to be shaped so as to have sufficient strength to hold a bearing. Furthermore, since the sub frame engages the main frame, their engagement portions need to be formed with a high precision.

On the other hand, the sub frame also functions as the surface of the bait casting reel. Therefore, the sub frame needs to have not only the functionality, but also a good ornamental design. Otherwise, the commercial value of the bait casting reel will be compromised.

Therefore, there has not been much flexibility in the design of sub frame due to various functional constraints of the bait casting reel. As a result, it has been very difficult if not impossible to establish common parts for use in different models, while providing the ornamental designs of users' preference and maintaining the functions of the bait casting reel at the same time. Accordingly, the manufacturing costs tended to be higher.

In view of the above, there exists a need for bait casting reel which overcomes the above mentioned problems in the prior art. This invention addresses this need in the prior art as well as other needs, which will become apparent to those skilled in the art from this disclosure.

### SUMMARY OF THE INVENTION

An object of the present invention is to provide a bait casting reel that has flexibility in its ornamental design and that can use common parts which can be used in other models, while securing the indispensable functions of the bait casting reel.

To achieve the aforementioned objects, the inventor of the present invention focused on the fact that it is effective to separate a member that positions and supports functional members such as the spool and the spool driving mechanism, which are indispensable in the bait casting reel, from a member that functions as a surface, instead of using as an outer plate of the bait casting reel the member that supports and positions the functional members.

In accordance with the present invention there is provided a bait casting reel as described in Claim 1.

In this structure, the spool and the spool driving mechanism are attached to the attachment frame such that they function in cooperation with each other. In other words, the spool and the spool driving mechanism are installed in the attachment frame.

By installing the spool and the spool driving mechanism in the attachment frame, the attachment frame, the spool, and the spool driving mechanism can form a unit that by itself has all the indispensable functions of the bait casting reel. By attaching the outer plate member to the attachment frame, the surface of the bait casting reel can be formed.

In other words, the bait casting reel of the present invention omits the sub frame, while the sub frame has been used in conventional bait casting reels as an outer plate to form the surface as well as to support the spool and the drag mechanism such that they function together. Instead, the bait casting reel of the present invention has the attachment frame which supports and positions the functional members such as the spool such that they function in cooperation with each other, with the surface being formed solely by the outer plate members. Accordingly, the outer plate member does not need to perform functions such as supporting the spool and positioning the spool driving mechanism. Therefore, there is no restriction on the design of the outer plate members due to functional requirements as has been the case with conventional bait casting reels. The outer plate members can be designed freely as ornamental parts.

Preferably, the basic unit of the bait casting reel further includes a braking mechanism for applying a brake to the rotation of the spool, and a level winding mechanism for winding the fishing line uniformly on the spool. The braking mechanism and the level winding mechanism can be attached to the attachment frame such that the braking mechanism and the level winding mechanism function in cooperation with each other.

In this manner, it is possible to achieve a favorable casting with the braking mechanism by preventing a backlash at the time of casting. The level winding mechanism winds the fishing line favorably by arranging the fishing line uniformly on the spool. Furthermore, since these members such as the braking member are installed in the attachment frame, the outer plate member does not need to perform functions such as supporting the spool and positioning the spool driving mechanism. Accordingly, there is no restriction on the design of the outer plate member due to functional requirements as has been the case with conventional bait casting reels. The outer plate members can be designed freely as ornamental parts.

The outer plate member can be fixedly coupled through a coupling structure. The outer plate member can be fixedly engaged using an engagement member.

The reason why such attachment structure can be employed is because the surface of the bait casting reel is solely formed by the outer plate member, and because there is no requirement for precision and solidness of attachment as in the case of conventional bait casting reels. By employing such attachment structure, attachment of the outer plate member is made very easy.

Particularly, by making the outer plate member from ABS resin, it is possible to apply coating and plating easily. Accordingly, it is possible to manufacture outer plate members in various shapes at a low cost.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a perspective view of the bait casting reel in accordance with a first embodiment of the present invention;
Figure 2 is a perspective view showing the structure of the basic unit of the bait casting reel in accordance with the first embodiment of the present invention;
Figure 3 is a cross-sectional view of a portion of the spool driving mechanism as viewed in the direction of arrow A-A in Figure 1;
Figure 4 is a perspective view of the first outer plate member in accordance with the first embodiment of the present invention;
Figure 5 is a perspective view of the second outer plate member in accordance with the first embodiment of the present invention;
Figure 6 is a perspective view of the third outer plate member in accordance with the first embodiment of the present invention;
Figure 7 is a perspective view of the fourth outer plate member in accordance with the first embodiment of the present invention;
Figure 8 is a perspective view of the bait casting reel in accordance with the second embodiment of the present invention;
Figure 9 is a perspective view of the bait casting reel in accordance with the third embodiment of the present invention;
Figure 10 is an exploded perspective view of the bait casting reel in accordance with the second embodiment of the present invention; and
Figure 11 is an exploded perspective view of the bait casting reel in accordance with the third embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following description of the embodiments of the present invention is provided for illustration only, and not for the purpose of limiting the invention as defined by the appended claims and their equivalents.

### <First Embodiment>

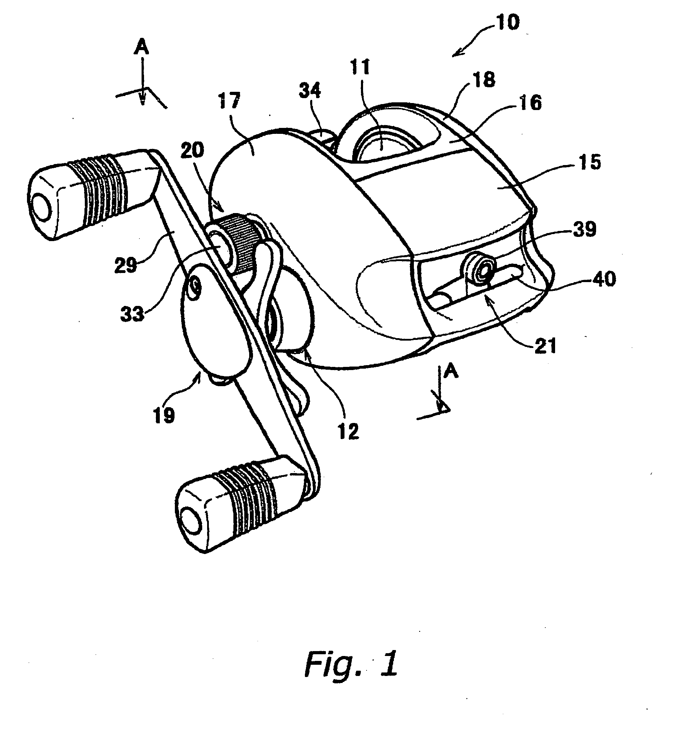

Figure 1 is a perspective view of a bait casting reel 10 in accordance with a first embodiment of the present invention.

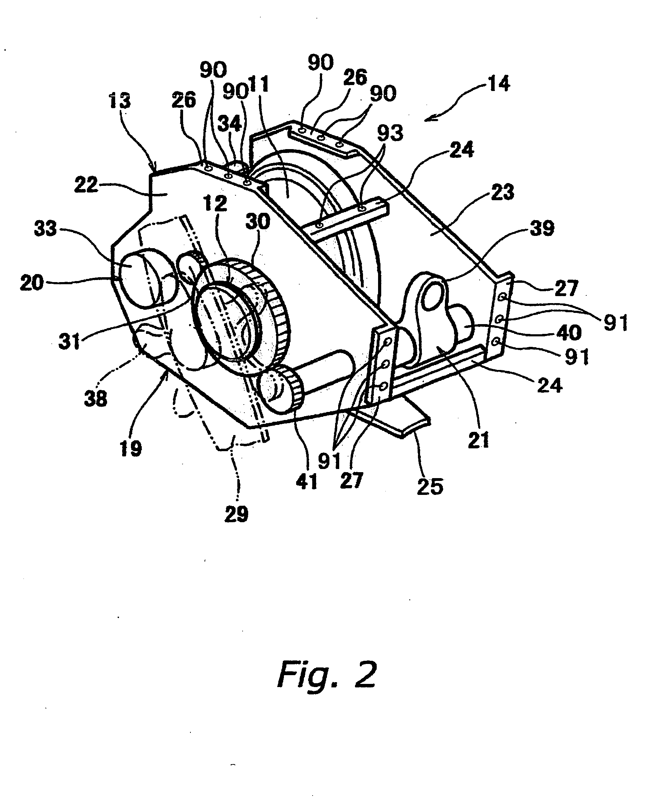

Referring to Figure 1, the bait casting reel 10 has a spool 11 and a spool driving mechanism 19 for driving the spool 11 disposed within an attachment frame 13 (see Figure 2) which will be described below. The spool 11 and the spool driving mechanism 19 are functional members that are indispensable for the bait casting reel 10. In this manner, a basic unit 14, which has all the indispensable functions of the bait casting reel 10, is structured. Then, outer plate members 15-18, which function as the surface of the bait casting reel 10, are attached to the basic unit 14. The bait casting reel 10 having a superior design can be formed in this manner.

In other words, the first through fourth outer plate members 15-18, which will be described later, are used solely for the purpose of creating the appearance of the bait casting reel 10. In this manner, the basic design of the functions of the bait casting reel 10 can be made easier. At the same time, a greater flexibility can be achieved in the ornamental design of the appearance of the bait casting reel 10. A detailed description of the bait casting reel 10 is as follows.

Figure 2 is a perspective view showing the structure of the aforementioned basic unit 14.

Referring to Figures 1 and 2, the bait casting reel 10 has the basic unit 14, and the first through fourth outer plate members 15-18.

As described above, the basic unit 14 has all the indispensable functions of the bait casting reel 10. In other words, the basic unit 14 is capable of performing functions such as winding and reeling out the fishing line by itself. The basic unit 14 includes the attachment frame 13, the spool 11, a spool driving mechanism 19 that drives the spool 11, a braking mechanism 20 that applies a brake to the rotation of the spool 11, and a level winding mechanism 21. The functional members such as the spool 11 are positioned at predetermined positions of the attachment frame 13, such that the functional members can function in cooperation with each other. The aforementioned spool driving mechanism 19 includes a drag mechanism 12. The drag mechanism 12 restricts reeling out of the fishing line and prevents a breakage of the fishing line by rotating the spool 11 in the reverse direction when a tension that is greater than a predetermined level is applied to the fishing line.

The attachment frame 13 can be made of a metal or a synthetic resin. The attachment frame 13 forms a skeleton of the bait casting reel 10. Referring to Figure 2, the attachment frame 13 includes a pair of side portions 22 and 23, which are disposed opposite from each other, a plurality of cross members 24, which is bridged over the side portions 22 and 23, and a leg portion 25, which is formed continuously with the cross members 24.

The cross members 24 increase the rigidity of the attachment frame 13. The cross members 24 also function as a seat for attaching the outer plate member 15. In Figure 2, only two of the cross members 24 are shown. However, the cross members can be formed on other positions as necessary.

A bracket 26 is formed on the side portion 22 as a one-piece unitary member. The bracket 26 is for attaching the outer plate member 16 thereon. A bracket 27 is formed on the front portion of the side portion 22 as a one-piece unitary member. The bracket 27 is for attaching the outer plate member 15 thereto. These brackets 26 and 27 respectively have engagement bores 90 and 91 for attaching the outer plate members. One of the cross members 24 also has engagement bores 93 for attaching the outer plate member 15. The side portion 22 has a plurality of insertion bores (not shown in Figures) for supporting members such as a main shaft 28 (to be described later) of the spool driving mechanism 19. A bearing is attached to an insertion bore that, for example, supports a rotational shaft 32 of the spool 11. The side portion 23 is formed symmetrically with the side portion 22. The side portion 23 also has the brackets 26 and 27 formed thereon.

The attachment frame 13 can be formed as a one-piece unitary member. Alternatively, the cross members 24 can be formed as separate members that are attachable to the side portions 22 and 23.

The spool 11, the spool driving mechanism 19, the braking mechanism 20, the drag mechanism 12, and the level winding mechanism 21 have structures that are similar to those of the conventional ones. Accordingly, only brief descriptions and explanations of how these components are assembled will be given with regard to these components.

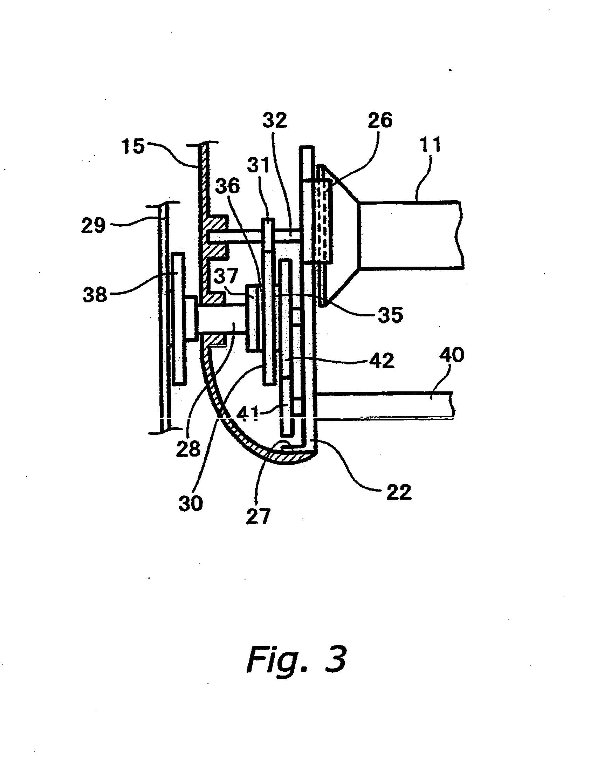

Figure 3 is a cross-sectional view of a portion of the spool driving mechanism 19 viewed in the direction of arrow A-A in Figure 1.

Referring to Figures 2 and 3, the spool 11 is a member for winding the fishing line. The spool 11 can rotate in the normal or reverse direction. The normal rotation winds the fishing line, while the reverse rotation reels out the fishing line from the spool 11.

The spool driving mechanism 19 includes the handle 29, the main shaft 28 coupled to the handle 29, a main gear 30 formed on the main shaft 28, a spool gear 31 that engages the main gear 30, a clutch mechanism (not shown in Figures), and the above-described drag mechanism 12. In Figure 2, the referential numeral 34 indicates a clutch lever. When the clutch mechanism is in an inactive state, the spool 11 is allowed to rotate freely. When the clutch mechanism is in an active state, the spool 11 is allowed to rotate in the normal direction. But the clutch mechanism, in cooperation with the drag mechanism 12 as described above, allows the reverse rotation of the spool 11 only under certain circumstances.

Therefore, once the clutch mechanism is turned into the active state, the fishing line can be wound on the spool 11 as the spool driving mechanism 19 rotates the spool 11 in the normal direction. At this time, if a tension is applied to the fishing line, the drag mechanism 12 restricts the rotation of the spool 11 in the reverse direction. If the tension that is applied to the fishing line is greater than a predetermined level, the spool 11 rotates in the reverse direction to prevent breakage of the fishing line. On the other hand, when the clutch mechanism is in the inactive state, the spool 11 can rotate freely in both normal and reverse directions. In this manner, casting of the bait can be performed.

The spool gear 31 is attached to the rotational shaft 32 of the spool 11. Therefore, when the handle 29 is rotated, the main shaft 28 is rotated. Accordingly, the rotational shaft 32 of the spool 11 is rotated via the main gear 30 and the spool gear 31. Thus, the spool 11 is rotated.

The braking mechanism 20 restricts the rotation of the spool 11. More specifically, the braking mechanism 20 applies a brake on the rotation of the rotational shaft 32 of the spool 11. The braking mechanism 20 is a mechanism for preventing a backlash of the fishing line at the time of casting. In this embodiment, a so-called mechanical brake is used as the braking mechanism 20. However, other type of brake mechanisms such as magnet type braking mechanism can be utilized instead of or in conjunction with the mechanical braking mechanism. In Figure 2, the referential numeral 33 indicates a thumbscrew for adjusting the braking force to be applied to the spool 11.

The drag mechanism 12 restrictively allows the reverse rotation of the spool 11 when the aforementioned clutch mechanism is in the active state. In other words, the drag mechanism 12 allows the reverse rotation of the spool 11 when a tension that is greater than a predetermined level is applied to the fishing line. In this manner, the fishing line is reeled out of the spool 11 by rotating the spool 11 in the reverse direction to prevent the breakage of the fishing line due to, for instance, "pull" by the fish during the fighting.

Referring to Figure 3, the drag mechanism 12 includes a pair of drag washers 35 and 36 that is disposed between the main gear 30 and the main shaft 28, a drag plate 37, a drag handle 38, and a pressure member (not shown in Figures) that is disposed between the drag handle 38 and the drag plate 37. By rotating the drag handle 38, a pressure is applied to the pressure member. Accordingly, a pressure is also applied to the drag plate 37. As a result, the pair of drag washers 35 and 36 sandwiches the main gear 30, thereby generating a predetermined resistance between the main gear 30 and the main shaft 28 (which corresponds to the predetermined tension applied to the fishing line).

Therefore, even while the clutch mechanism is in the active state, once a tension that is greater than the predetermined level is applied to the fishing line, a rotational force in the reverse direction is applied to the spool 11. At this time, a slip occurs between the main gear 30 and the main shaft 28, such that only the spool 11 rotates in the reverse direction.

The level winding mechanism 21 aligns the fishing line uniformly on the spool 11 when the fishing line is wound by rotating the spool 11. The level winding mechanism 21 includes a level winder 39 through which the fishing line passes, a slide shaft 40 that supports the level winder 39, a driving gear 41 that is installed on the slide shaft 40, and an intermediate gear 42 that engages the driving gear 41 and is installed on the main shaft 28.

When the main gear 28 is rotated, the spool 11 is also rotated, thereby winding the fishing line. At the same time, the slide shaft 40 is rotated via the intermediate gear 42 and the driving gear 41. The slide shaft 40 has helical grooves formed thereon in the axial direction. The level winder 39 engages these grooves. Therefore, as the slide shaft 40 rotates, the level winder 39 shifts front and rear along the slide shaft 40. As a result, the fishing line is wound and aligned uniformly on the spool 11.

Next, each of the outer plate members 15-18 will be explained.

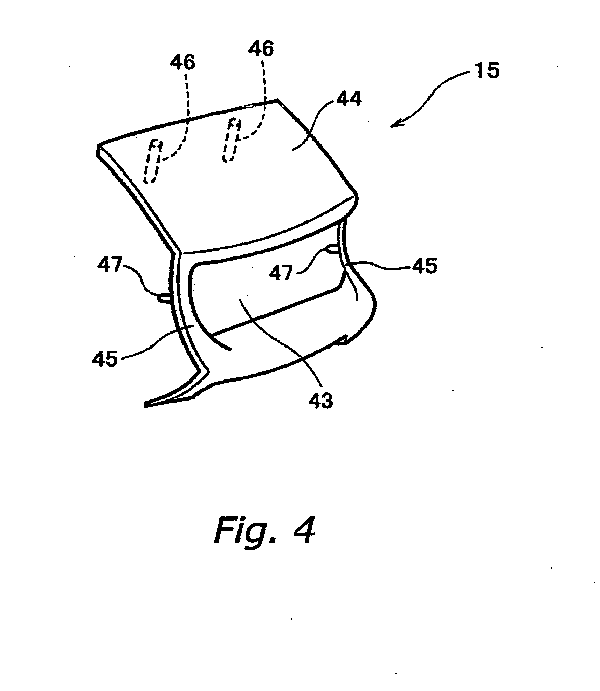

Figure 4 is a perspective view of the first outer plate member 15.

Referring to Figures 1 and 4, the first outer plate member 15 can be made of a synthetic resin as a one-piece unitary member. The first outer plate member 15 functions as the frontal surface of the bait casting reel 10. The first outer plate member 15 has a fishing line passing window 43 to allow the fishing line to pass therethrough. Engaging pins 46 and 47 (an example of first engagement portion) are formed projecting from a ceiling portion 44 and pillar portions 45 (body portion) of the first outer plate member 15. The engaging pins 46 engage the engagement bores 93 formed on the cross member 24 (see Figure 2) of the attachment frame 13. Similarly, the engaging pins 47 engage the engagement bores 91 formed on the brackets 27 (see Figure 2) of the attachment frame 13.

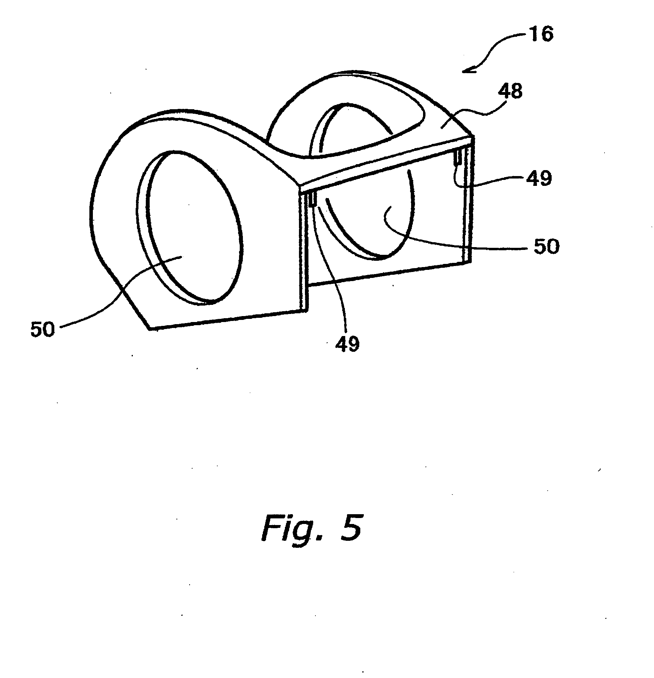

Referring to Figures 1 and 5, the second outer plate member 16 can be made of a synthetic resin as a one-piece unitary member. The second outer plate member 16 functions as an upper surface of the bait casting reel 10. Engaging pins 49 are formed projecting from a top plate 48 of the second outer plate member 16. The engaging pins 49 engage the engagement bores 90 of the brackets 26 (see Figure 2) of the attachment frame 13. The referential numerals 50 are openings to accommodate the spool 11 therein.

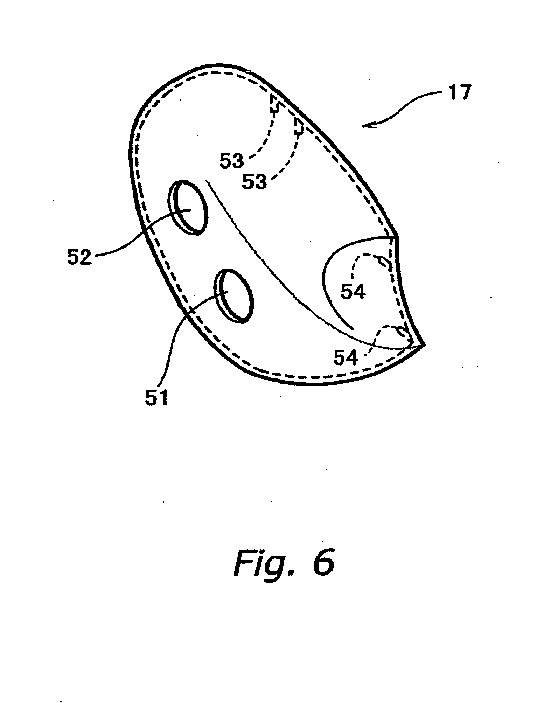

Referring to Figures 1 and 6, the third outer plate member 17 can be made of a synthetic resin as a one-piece unitary member. In this embodiment, as seen in Figures, the third plate member 17 has an egg-like shape. The third outer plate member 17 is shaped like a container with its inner portion taken away. The third outer plate member 17 forms the right side surface of the bait casting reel 10. Engaging pins 53 and 54 are formed projecting from the main body of the third outer plate member 17. The engaging pins 53 engage the engagement bores 90 of the bracket 26 of the attachment frame 13, while the engaging pins 54 engage the engagement bores 91 of the bracket 27. The brackets 26 and 27 have engagement bores 90 and 91, which the engaging pins 53 and 54 engage.

The third outer plate member 17 includes a main shaft insertion opening 51 and a brake thumbscrew insertion opening 52. The main shaft insertion opening 51 can receive the main shaft 28 of the spool driving mechanism 19 (see Figure 3) inserted therethrough. As shown in Figure 1, the handle 29 can be disposed outside the third outer plate 17. The brake thumbscrew insertion opening 52 can receive a thumbscrew 33 of the braking mechanism 20 inserted therethrough. As shown in Figure 1, the thumbscrew 33 can be disposed outside the third outer plate member 17.

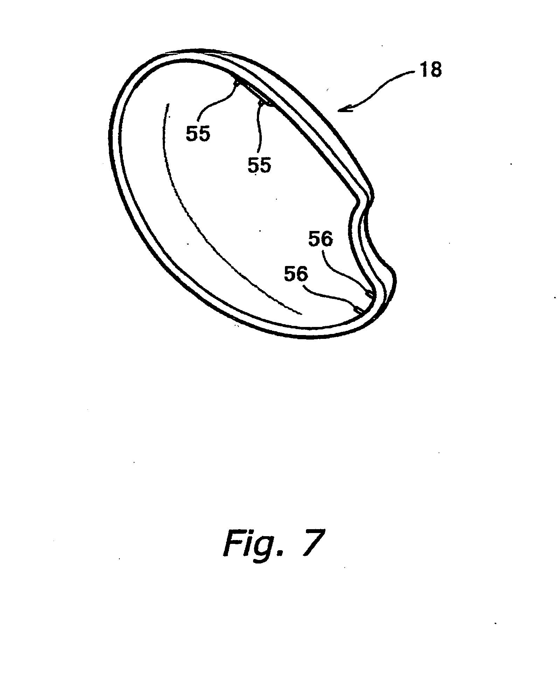

Referring to Figures 1 and 7, the fourth outer plate member 18 can be made of a synthetic resin as a one-piece unitary member. In this embodiment, the fourth outer plate member 18 is formed symmetrically with the third outer plate member 17. However, while the third outer plate member 17 has the main shaft insertion opening 51 and the brake thumbscrew insertion opening 52, the fourth outer plate member 18 does not have such openings. This is because the handle 29 and the thumbscrew 33 are not disposed on the left side of the bait casting reel 10. Where the handle 29 and other members are disposed on the left side, however, the fourth outer plate member 18, like the third outer plate member 17, can have openings for inserting the main shaft 28 therethrough. The fourth outer plate member 18 forms the left side surface of the bait casting reel 10.

Engaging pins 55 and 56 are formed projecting from the fourth outer plate member 18. The engaging pins 55 engage the engagement bores 90 of the bracket 26 of the attachment frame 13, while the engaging pins 56 engage the engagement bores 91 of the bracket 27. The brackets 26 and 27 have engagement bores 90 and 91, which the engaging pins 55 and 56 engage.

According to this embodiment, the functional members such as the spool 11, the spool driving mechanism 19, the braking mechanism 20, and the level winding mechanism 21 are installed in the attachment frame 13, such that the functional members function in cooperation with each other. Accordingly, the attachment frame 13 and the aforementioned functional members that are installed in the attachment frame 13 form the basic unit 14, which by itself has indispensable functions of the bait casting reel 10. The surfaces of the bait casting reel 10 are formed by attaching each of the outer plate members 15-18 to the attachment frame 13. In this manner, the complete bait casting reel 10 is created.

The manner of assembling the bait casting reel 10 will now be explained. First of all, the spool 11 is attached to the attachment frame 13. Then, the braking mechanism 20 is attached. Then, the level winding mechanism 21 and the spool driving mechanism 19 are installed. Thereafter, each of the outer plate members 15-18 is attached. However, the handle 29 of the spool driving mechanism 19 and the drag handle 38 of the drag mechanism 12 are installed after all of the outer plate members 15-18 are attached. The braking mechanism 20, the spool driving mechanism 19, and the level winding mechanism 21 are detachably attached to the attachment frame 13 to allow easy maintenance of the bait casting reel 10.

Since the surfaces of the bait casting reel 10 are formed solely by the outer plate members 15-18 in the aforementioned manner, the outer plate members 15-18 do not need to function as a support for the spool 11 or a support for the drag mechanism 12. Accordingly, there is no design restriction due to the functional requirements as in the case of conventional bait casting reels. As a result, the appearance of the bait casting reel 10 can be freely designed. Furthermore, by establishing the outer plate members only as an option product, it is possible to provide a variety of bait casting reels with the ornamental designs of users' preference.

By making each of the outer plate members 15-18 from an ABS resin, it is possible to apply coating or plating more easily. In this manner, it is possible to manufacture outer plate members with a more variety of ornamental designs at a low cost.

In the above embodiment, the outer plate members 15-18 are shown as an example. Accordingly, the shapes of the outer plate members are not limited to the ones disclosed in the embodiment; the outer plate members can have any desired shape.

Furthermore, in the above embodiment, the outer plate members 15-18 are attached to the attachment frame 13 through engagement (coupling) via the engaging pins. Since each of the outer plate members 15-18 only functions as a surface of the bait casting reel 10, the requirements for precision and solidness of attachment (tightness of assembly and rigidity against twisting and bending) are not as great as in the case of conventional bait casting reels. By adopting such coupling structure, the outer plate members 15-18 can be attached to the attachment frame 13 very easily. Accordingly, the cost of assembling the bait casting reel 10 can be reduced.

However, the manner of attaching the outer plate members 15-18 is not limited to the coupling structure. The outer plate members 15-18 can be attached by any other known engagement structure such as coupling the outer plate members 15-18 directly to the attachment frame 13.

### <Second and Third Embodiments>

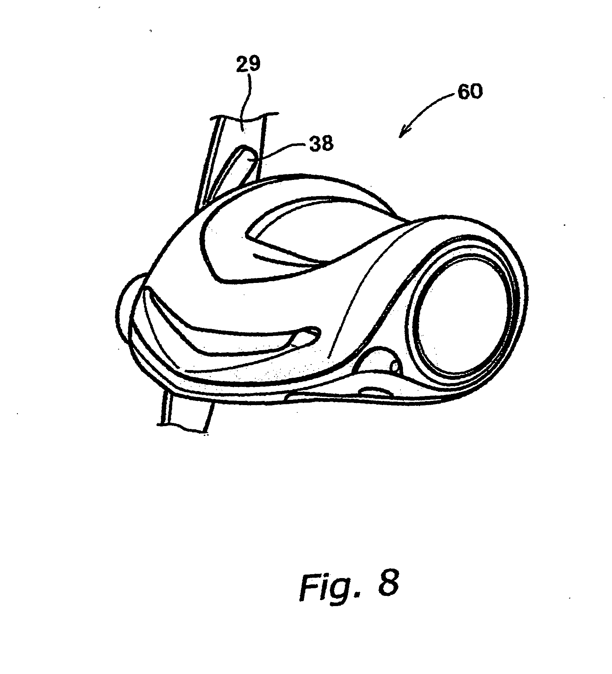

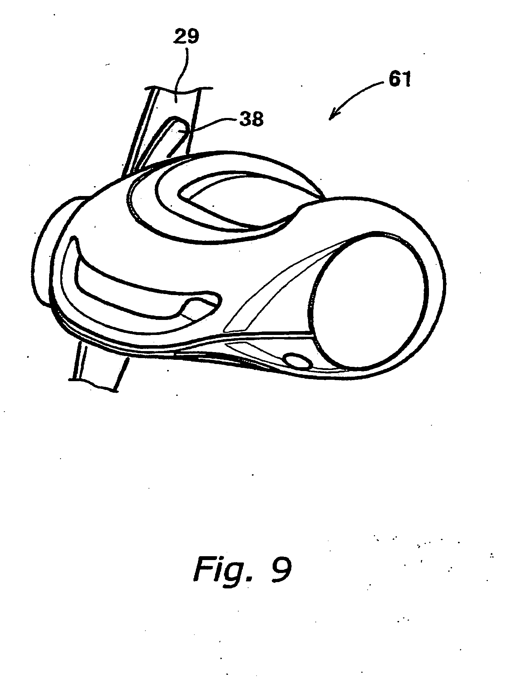

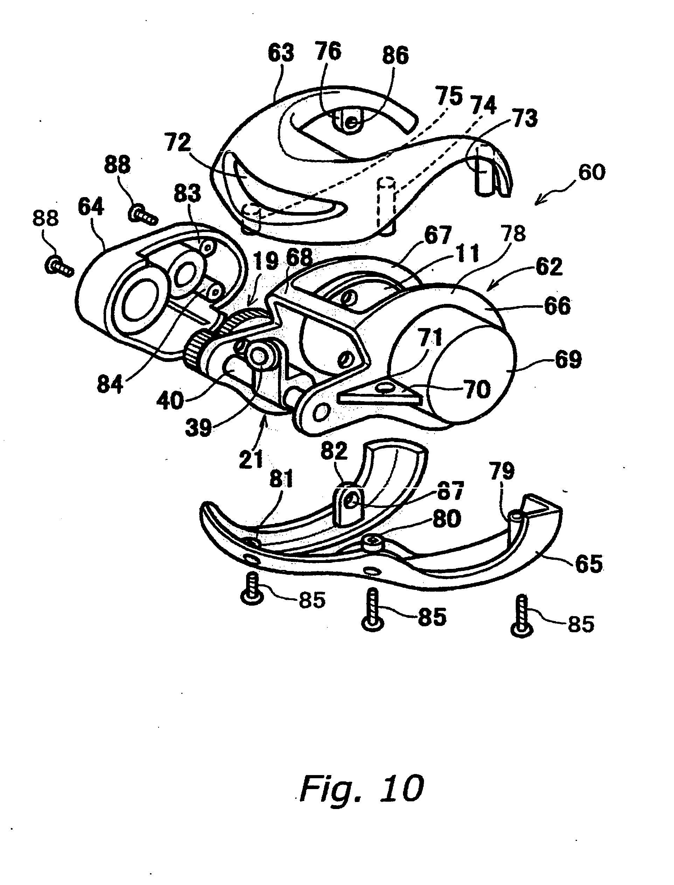

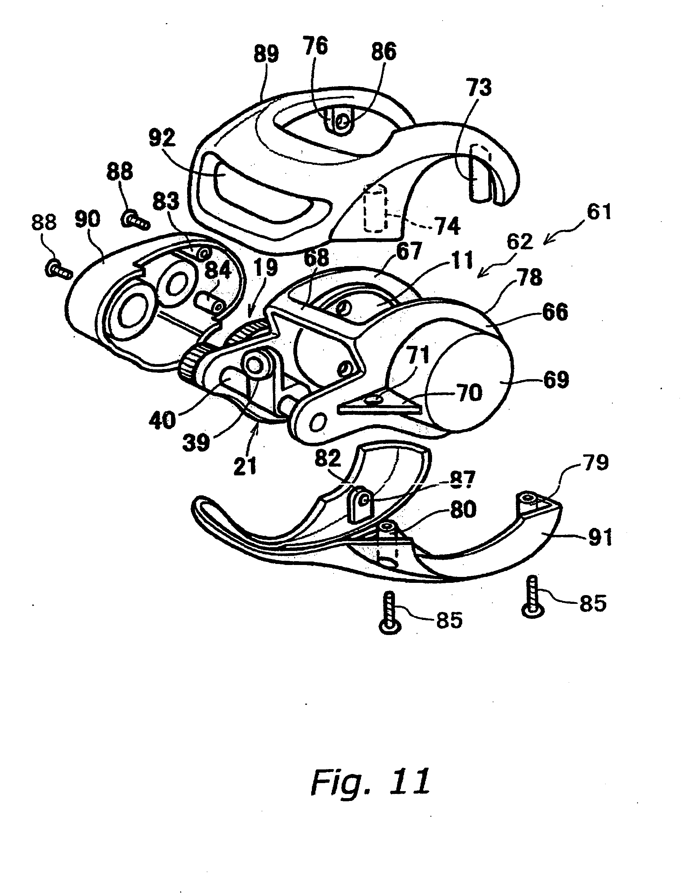

Next, second and third embodiments of the present invention will be described with reference to Figures 8-11. Figures 8 and 10 show the bait casting reel 60 of the second embodiment, while Figures 9 and 11 show the bait casting reel 61 of the third embodiment.

Figures 8 and 9 are perspective views of bait casting reels 60 and 61 in accordance with the second and third embodiments of the present invention, respectively.

In this embodiment, as in the above-discussed first embodiment, each of the bait casting reels 60 and 61 has a basic unit and outer plate members attached to the basic unit. The basic unit and the outer plate members will be described later. In other words, these bait casting reels 60 and 61 have a common basic unit 62, which has all indispensable functions of bait casting reels 60 and 61. Therefore, the bait casting reels 60 and 61 are the same in terms of functionality, yet their appearances are different. In the descriptions below, components that are the same as in the above-described bait casting reel 10 will be given the same referential numerals. Also, explanation of those components will be omitted.

Figure 10 is an exploded perspective view of the bait casting reel 60 in accordance with the second embodiment of the present invention.

Referring to Figure 10, the bait casting reel 60 includes a basic unit 62 and outer plate members 63-65 (example of first through third outer plate members).

As in the above-described first embodiment, the basic unit 62 includes all the indispensable functions of the bait casting reel 60. In other words, the basic unit 62 is capable of performing functions such as winding and reeling out the fishing line by itself. The basic unit 62 includes an attachment frame 78, the spool 11, the spool driving mechanism 19 that drives the spool 11, the braking mechanism 20 (not shown in Figures) that brakes rotation of the spool 11, and the level winding mechanism 21. These functional members such as the spool 11 are positioned at predetermined positions in the attachment frame 78. Each of these functional members is installed in the attachment frame 78 such that they can function in cooperation with each other.

The attachment frame 78 can be made of a metal or a synthetic resin. The attachment frame 78 forms the skeleton of the bait casting reel 60. The attachment frame 78 includes a pair of side portions 66 and 67 that are disposed opposite each other, a cross member 68 that bridges the side portions 66 and 67, and a leg portion (same structure as in the first embodiment) that is not shown in Figures but is formed continuously with the attachment frame 78. Although only one cross member 68 is shown in Figure 10, there can be a plurality of cross members 68 to secure the requisite rigidity of the attachment frame 78.

The side portion 66 has a cylindrical portion 69 formed thereon as shown in Figure 10. A rib 70 is formed in between the cylindrical portion 69 and the front end portion of the side portion 66. The rib 70 has an engagement bore 71 (an example of second engagement portion) formed thereon. The engagement bore 71 is for fixedly coupling a fixing boss 80 (an example of first engagement portion) of the outer plate member 65 thereto.

The side portion 67 has a plurality of insertion bores (not shown in Figures) for supporting members such as the main axis of the spool driving mechanism 19. A requisite bearing is attached to an insertion bore that, for example, supports a rotational shaft of the spool 11.

In this embodiment, the attachment frame 78 is formed as a one-piece unitary member. Alternatively, the cross member 68 can be formed as a separate member that is attachable to the side portions 66 and 67.

The spool 11, the spool driving mechanism 19 that includes the drag mechanism 12, the braking mechanism 20, and the level winding mechanism 21 are the same as the conventional ones. Since these components have been described in the first embodiment, the explanation of these components will be omitted.

The outer plate member 63 can be made of, for example, a synthetic resin (preferably ABS resin) as a one-piece unitary member. The outer plate member 63 functions as the surface of the bait casting reel 60 covering the front portion, the top portion, and both of the side portions. The first outer plate member 63 has a fishing line passing window 72 to allow the fishing line to pass therethrough. As shown in Figure 10, the outer plate member 63 is formed in the shape of sun glasses. The outer plate member 63 includes fixing bosses 73, 74, and 75 (example of third engagement portion), and a fixing bracket 76.

The fixing bosses 73, 74, and 75 are respectively opposed to and threadedly coupled to fixing bosses 79, 80, and 81 (example of fourth engagement portion) of the outer plate member 65 which will be described later to engage said outer plate members 63 and 65. The fixing bracket 76, along with a fixing bracket 82 of the outer plate member 65 which will be described later, is fixedly coupled to the side portion 67 of the attachment frame 78 via the outer plate member 64.

The outer plate member 64 can be made of, for example, a synthetic resin (preferably ABS resin) as a one-piece unitary member. The outer plate 64 functions as the surface covering a portion of the right side portion of the bait casting reel 60. The outer plate 64 has fixing bosses 83 and 84 formed thereon, such that the fixing bosses 83 and 84 can be threadedly coupled to the side portion 67 of the attachment frame 78.

The outer plate member 65 can be made of, for example, a synthetic resin (preferably ABS resin) as a one-piece unitary member. The outer plate member 65 functions as the surface covering both of the side portions and a portion of the bottom portion of the bait casting reel 60. The outer plate member 65 has the fixing bosses 79, 80, and 81, and the fixing bracket 82 formed thereon.

This bait casting reel 60 is assembled in the following manner.

First of all, the outer plate member 65 is attached to the attachment frame 78 from below. At this time, the fixing boss 80 is inserted through the engagement bore 71 formed on the rib 70 of the attachment frame 78. In this manner, the position of the outer plate member 65 is determined relative to the attachment frame 78. Then, the outer plate members 63 and 64 are attached to the attachment frame 78 from above and from the side, respectively. At this time, the fixing bosses 79-81 are opposed to the fixing bosses 73-75 respectively. Screws 85 are screwed into the outer plate member 65 from below to position the outer plate members 63 and 65 relative to the attachment frame 78.

Where the outer plate members 63 and 65 are positioned as described above, the fixing brackets 76 and 82 are disposed along the right side portion of the attachment frame 78. By disposing the outer plate member 64 on the right side portion of the attachment frame 78, the fixing bosses 83 and 84 are opposed to the fixing brackets 76 and 82. Then, by screwing screws 88 (example of engagement member) into the fixing bosses 83 and 84 and the fixing brackets 78 and 82, the outer plate member 64 is coupled to the outer plate members 63 and 65. As a result, each or the outer plate members 63-65 is positioned and fixedly coupled to the attachment frame 78. The fixing brackets 76 and 82 have threaded bores 86 and 87, to allow the screws 88 to be inserted therethrough.

Figure 11 is an exploded perspective view of the bait casting reel 61 in accordance with the third embodiment of the present invention.

Referring to Figure 11, the bait casting reel 61 includes the basic unit 62 of the bait casting reel 60 as described above, and the outer plate members 89-91. The only difference between the structure of the bait casting reel 61 and that of the bait casting reel 60 is the outer shapes of the outer plate members 89-91.

In other words, in comparing the outer plate members 63-65 of the bait casting reel 60 and the outer plate members 89-91 of the bait casting reel 61, the outer plate member 89 corresponds to the outer plate member 63 of the bait casting reel 60, the outer plate member 90 corresponds to the outer plate member 64 of the bait casting reel 60, and the outer plate member 91 corresponds to the outer plate member 65 of the bait casting reel 60.

The bait casting reel 60 differs from the bait casting reel 61 in its outer shape and the shape of the line insertion window 92. The bait casting reel 61 also does not have the fixing bosses 75 and 81. The shapes and positions of the fixing bosses 73-74 and the fixing bracket 76 of the outer plate member 89 are the same as those of the outer plate member 63 (see Figure 10). Similarly, the outer plate members 90 and 91 differ from the outer plate members 64 and 65 only in their outer shapes, except that the outer plate member 91 does not have the fixing boss 81.

According to the present embodiment, the functional members such as the spool 11, the spool driving mechanism 19, the braking mechanism 20, and the level winding mechanism 21 are attached to the attachment frame 78 such that the functional members function in cooperation with each other. Accordingly, the basic unit 62 by itself has all the indispensable functions of the bait casting reels 60 and 61. By attaching each of the outer plate members 63-65 or 89-91 to the attachment frame 78, the surfaces of the bait casting reel 60 or 61 are completely formed. In this manner, the complete bait casting reel 60 or 61 is created.

Since the surfaces of the bait casting reels 60 and 61 are formed solely by the outer plate members 63-65 or 89-91 in this embodiment, the outer plate members 63-65 and 89-91 do not need to function as a support for the spool 11 or a support for the drag mechanism 12. Accordingly, there is no design restriction due to functional requirements as in the case of conventional bait casting reels. As a result, the appearance of the bait casting reel 60 or 61 can be freely designed. Furthermore, by establishing the outer plate members only as an option product, it is possible to change the ornamental design of the bait casting reel 60 to that of the bait casting reel 61 easily. Accordingly, it is possible to provide a variety of bait casting reels with ornamental designs of users' preference.

Furthermore, in the above embodiment, the outer plate members 63-65 and 89-91 are attached to the attachment frame 78 through a fastening structure utilizing the screws 85 and 88. Since each of the outer plate members 63-65 and 89-91 only functions as a surface of the bait casting reels 60 and 61 as in the first embodiment, the requirements for precision and solidness of attachment (tightness of assembly and rigidity against twisting and bending) are not as great as in the case of conventional bait casting reels. By adopting such fastening structure, the outer plate members 63-65 and 89-91 can be attached to the attachment frame 78 very easily. Accordingly, the cost of assembling the bait casting reel 60 or 61 can be reduced.

By making each of the outer plate members 63-65 and 89-91 from an ABS resin, it is possible to apply coating or plating more easily as in the first embodiment. In this manner, it is possible to manufacture outer plate members with a still greater variety of ornamental designs at a low cost.

In the above-described embodiments, the bait casting reel 10, 60, or 61 has the braking mechanism 20 and the level winding mechanism 21 as its functional members. However, these functional members can be omitted. In other words, since the braking mechanism 20 and the level winding mechanism 21 are detachably attached to the attachment frame 13 or 78 as described above, the basic unit 14 or 62 can be formed with the braking mechanism 20 and the level winding mechanism 21 being detached. In this manner, the braking mechanism 20 and the level winding mechanism 21 can be provided as an option product of the bait casting reel 10, 60, or 61. Thus, it is possible to provide a bait casting reel with a specification of user's request.

As described above, according to the present invention, the bait casting reel includes a unit that has all the indispensable functions of the bait casting reel, and outer plate members that are attached to the unit. Therefore, the surfaces of the bait casting reel can be designed freely without having to take into consideration the shapes of the functional components.

Therefore, the flexibility of design of the bait casting reel increases overall. Accordingly, it is possible to provide low-priced and high-quality bait casting reels. Furthermore, since the outer plate members function merely as decorative plates, it is possible to provide a variety of outer plate members as option products. In this manner, it is possible to perform design change easily and cheaply to meet users' preference. In addition, it is possible to establish common products that can be utilized in various models. Accordingly, it is possible to reduce the cost of parts of bait casting reels.

As used herein, the following directional terms "forward, rearward, above, downward, vertical, horizontal, below and transverse" as well as any other similar directional terms refer to those directions of a device equipped with the present invention. Accordingly, these terms, as utilized to describe the present invention should be interpreted relative to a device equipped with the present invention.

The terms of degree such as "substantially," "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

This application claims priority to Japanese Patent Application No. 2001-321593. The entire disclosure of Japanese Patent Application No. 2001-321593 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

## Claims

1. A bait casting double-bearing reel (10) to be attached to a fishing rod, comprising:
a basic unit (14) including a spool (11) for winding or reeling out a fishing line by being rotated in normal or reverse direction, and an attachment frame (13); and
the reel further comprising an outer plate portion that is attached to said attachment frame (13) of said basic unit (14),
**characterised in that** said basic unit (14) further comprises a spool driving mechanism (19) for driving said spool (11), wherein said spool (11) and said spool driving mechanism (19) are attached to said attachment frame (13) such that said spool (11) and said spool driving mechanism (19) can function in co-operation with each other.

2. The bait-casting reel as set forth in Claim 1, wherein
said basic unit (14) further includes a braking mechanism (20) for applying a brake to the rotation of said spool (11), and
a level winding mechanism (21) for winding the fishing line uniformly on said spool; and
said braking mechanism and said level winding mechanism are attached to said attachment frame (13) such that said braking mechanism and said level winding mechanism function in co-operation with each other.

3. The bait-casting reel as set forth in Claim 1 or Claim 2, wherein
said outer plate portion has a first engagement portion;
said attachment frame (13) has a second engagement portion; and
said outer plate portion is detachably attached to said attachment frame by engaging said first and second engagement portions.

4. The bait-casting reel as set forth in any preceding Claim wherein
said outer plate portion further has a body portion;
said first engagement portion includes a pin projecting from said body portion;
said second engagement portion includes an engagement bore which engages said pin.

5. The bait-casting reel as set forth in Claim 3 or Claim 4, wherein
said outer plate portion is detachably attached to said attachment frame by engaging said first and second engagement portions through an engagement member.

6. The bait-casting reel as set forth in Claim 5, wherein
said outer plate portion further has a body portion;
said first engagement portion includes a fixed boss formed on said body portion;
said second engagement portion includes an engagement bore; and
said engagement member includes a screw that is screwed into said engagement bore and said fixed boss.

7. The bait-casting reel as set forth in any preceding Claim , wherein
said attachment frame includes a pair of side portions (22, 23), a cross member (24) that bridges over said pair of side portions, and a leg portion (25) that is attachable to the fishing rod.

8. The bait-casting reel as set forth in Claim 7, when dependent on Claim 3, wherein
said second engagement portion is formed on said side portions (22, 23).

9. The bait-casting reel as set forth in Claim 7, when dependent on Claim 3, wherein said second engagement portion is formed on said cross member.

10. The bait-casting reel as set forth in Claim 7, wherein
said cross member (24) and said pair of side portions (22, 23) are formed as a one-piece unitary member.

11. The bait-casting reel as set forth in any preceding Claim , wherein
said outer plate portion includes first through third outer plate members (15, 16, 17).

12. The bait-casting reel as set forth in Claim 11, wherein said first outer plate member (15) has a third engagement portion, and
said second outer plate member (16) has a fourth engagement portion that engages said third engagement portion to couple said first and second outer plate members (15, 16) .

13. The bait-casting reel as set forth in Claim 11 or Claim 12, wherein
said outer plate portion further includes a fourth outer plate member (18).

14. The bait-casting reel as set forth in any preceding Claim , wherein
said outer plate portion is made from ABS resin.

15. The bait-casting reel as set forth in any preceding Claim, wherein
said spool driving mechanism (19) includes a clutch mechanism and a drag mechanism (12), said clutch mechanism operatively taking one of active and inactive states, said drag mechanism (12) restrictively allowing reverse rotation of said spool (11) when said clutch mechanism is in the active state.

## Patentansprüche

1. Eine doppelt gelagerte Rolle (10) zum Auswerfen von Ködern, die an einer Angelrute befestigt werden soll, die Folgendes beinhaltet:
eine Grundeinheit (14), die eine Spule (11) zum Wickeln oder Abrollen einer Angelschnur durch Drehung in normaler oder umgekehrter Richtung und einen Befestigungsrahmen (13) umfasst; und
wobei die Rolle ferner einen äußeren Plattenabschnitt, der an dem Befestigungsrahmen (13) der Grundeinheit (14) befestigt ist, beinhaltet,
**dadurch gekennzeichnet, dass** die Grundeinheit (14) ferner einen Spulenantriebsmechanismus (19) zum Antreiben der Spule (11) beinhaltet, wobei die Spule (11) und der Spulenantriebsmechanismus (19) so an dem Befestigungsrahmen (13) befestigt sind, dass die Spule (11) und der Spulenantriebsmechanismus (19) in Zusammenwirkung miteinander funktionieren können.

2. Rolle zum Auswerfen von Ködern gemäß Anspruch 1, wobei
die Grundeinheit (14) ferner einen Bremsmechanismus (20) zur Anwendung einer Bremse an die Drehung der Spule (11) umfasst, und
einen Ausgleichs-Wickelmechanismus (21) zum gleichmäßigen Wickeln der Angelschnur auf die Spule; und
der Bremsmechanismus und der Ausgleichs-Wickelmechanismus so an dem Befestigungsrahmen (13) befestigt sind, dass der Bremsmechanismus und der Ausgleichs-Wickelmechanismus in Zusammenwirkung miteinander funktionieren.

3. Rolle zum Auswerfen von Ködern gemäß Anspruch 1 oder Anspruch 2, wobei
der äußere Plattenabschnitt einen ersten Eingriffsabschnitt aufweist;
der Befestigungsrahmen (13) einen zweiten Eingriffsabschnitt aufweist; und
der äußere Plattenabschnitt durch das Eingreifen in den ersten und zweiten Eingriffsabschnitt abnehmbar an dem Befestigungsrahmen befestigt ist.

4. Rolle zum Auswerfen von Ködern gemäß einem der vorhergehenden Ansprüche, wobei
der äußere Plattenabschnitt ferner einen Körperabschnitt aufweist;
der erste Eingriffsabschnitt einen von dem Körperabschnitt vorstehenden Stift umfasst;
der zweite Eingriffsabschnitt eine Eingriffsbohrung umfasst, die mit dem Stift in Eingriff steht.

5. Rolle zum Auswerfen von Ködern gemäß Anspruch 3 oder Anspruch 4, wobei
der äußere Plattenabschnitt durch das Eingreifen in den ersten und zweiten Eingriffsabschnitt mittels eines Eingriffselements abnehmbar an dem Befestigungsrahmen befestigt ist.

6. Rolle zum Auswerfen von Ködern gemäß Anspruch 5, wobei
der äußere Plattenabschnitt ferner einen Körperabschnitt aufweist;
der erste Eingriffsabschnitt einen auf dem Körperabschnitt gebildeten ortsfesten Vorsprung umfasst;
der zweite Eingriffsabschnitt eine Eingriffsbohrung umfasst; und
das Eingriffselement eine Schraube umfasst, die in die Eingriffsbohrung und den ortsfesten Vorsprung eingeschraubt ist.

7. Rolle zum Auswerfen von Ködern gemäß einem der vorhergehenden Ansprüche, wobei
der Befestigungsrahmen ein Paar Seitenabschnitte (22, 23), eine Querstrebe (24), die sich über das Paar Seitenabschnitte erstreckt, und einen Schenkelabschnitt (25), der an der Angelrute befestigt werden kann, umfasst.

8. Rolle zum Auswerfen von Ködern gemäß Anspruch 7, wenn von Anspruch 3 abhängig, wobei
der zweite Eingriffsabschnitt auf den Seitenabschnitten (22, 23) gebildet ist.

9. Rolle zum Auswerfen von Ködern gemäß Anspruch 7, wenn von Anspruch 3 abhängig, wobei der zweite Eingriffsabschnitt auf der Querstrebe gebildet ist.

10. Rolle zum Auswerfen von Ködern gemäß Anspruch 7, wobei
die Querstrebe (24) und das Paar Seitenabschnitte (22, 23) als ein einteiliges einheitliches Element gebildet sind.

11. Rolle zum Auswerfen von Ködern gemäß einem der vorhergehenden Ansprüche, wobei
der äußere Plattenabschnitt ein erstes bis drittes äußeres Plattenelement (15, 16, 17) umfasst.

12. Rolle zum Auswerfen von Ködern gemäß Anspruch 11, wobei das erste äußere Plattenelement (15) einen dritten Eingriffsabschnitt aufweist, und
das zweite äußere Plattenelement (16) einen vierten Eingriffsabschnitt aufweist, der mit dem dritten Eingriffsabschnitt in Eingriff steht, um das erste und zweite äußere Plattenelement (15, 16) zu koppeln.

13. Rolle zum Auswerfen von Ködern gemäß Anspruch 11 oder Anspruch 12, wobei
der äußere Plattenabschnitt ferner ein viertes äußeres Plattenelement (18) umfasst.

14. Rolle zum Auswerfen von Ködern gemäß einem der vorhergehenden Ansprüche, wobei
der äußere Plattenabschnitt aus ABS-Harz hergestellt ist.

15. Rolle zum Auswerfen von Ködern gemäß einem der vorhergehenden Ansprüche, wobei
der Spulenantriebsmechanismus (19) einen Kupplungsmechanismus und einen Widerstandsmechanismus (12) umfasst, wobei der Kupplungsmechanismus betriebsbereit entweder einen aktiven oder inaktiven Zustand einnimmt, wobei der Widerstandsmechanismus (12) einschränkend die umgekehrte Drehung der Spule (11) erlaubt, wenn sich der Kupplungsmechansimus im aktiven Zustand befindet.

## Revendications

1. Un moulinet à deux paliers pour le lancer à l'appât (10) destiné à être attaché à une canne à pêche, comportant :
une unité de base (14) comprenant une bobine (11) destinée à enrouler ou dérouler une ligne de pêche par entraînement en rotation dans un sens normal ou inverse, et un cadre d'attache (13) ; et
le moulinet comportant de plus une portion formant plaque externe qui est attachée audit cadre d'attache (13) de ladite unité de base (14),
**caractérisé en ce que** ladite unité de base (14) comporte de plus un mécanisme d'entraînement de bobine (19) destiné à entraîner ladite bobine (11), dans lequel ladite bobine (11) et ledit mécanisme d'entraînement de bobine (19) sont attachés audit cadre d'attache (13) de sorte que ladite bobine (11) et ledit mécanisme d'entraînement de bobine (19) puissent fonctionner en coopération l'un avec l'autre.

2. Le moulinet pour le lancer à l'appât tel qu'exposé dans la revendication 1, dans lequel
ladite unité de base (14) comprend de plus un mécanisme de freinage (20) destiné à appliquer un frein à la rotation de ladite bobine (11), et
un mécanisme d'enroulement régulier (21) destiné à enrouler la ligne de pêche de façon uniforme sur ladite bobine ; et
ledit mécanisme de freinage et ledit mécanisme d'enroulement régulier sont attachés audit cadre d'attache (13) de sorte que ledit mécanisme de freinage et ledit mécanisme d'enroulement régulier fonctionnent en coopération l'un avec l'autre.

3. Le moulinet pour le lancer à l'appât tel qu'exposé dans la revendication 1 ou la revendication 2, dans lequel
ladite portion formant plaque externe a une première portion de mise en prise ;
ledit cadre d'attache (13) a une deuxième portion de mise en prise ; et
ladite portion formant plaque externe est attachée de façon amovible audit cadre d'attache en mettant en prise ladite première et ladite deuxième portion de mise en prise.

4. Le moulinet pour le lancer à l'appât tel qu'exposé dans n'importe quelle revendication précédente, dans lequel
ladite portion formant plaque externe a de plus une portion formant corps ;
ladite première portion de mise en prise comprend une broche faisant saillie de ladite portion formant corps ;
ladite deuxième portion de mise en prise comprend un alésage de mise en prise qui met en prise ladite broche.

5. Le moulinet pour le lancer à l'appât tel qu'exposé dans la revendication 3 ou la revendication 4, dans lequel
ladite portion formant plaque externe est attachée de façon amovible audit cadre d'attache en mettant en prise ladite première et ladite deuxième portion de mise en prise par l'intermédiaire d'un élément de mise en prise.

6. Le moulinet pour le lancer à l'appât tel qu'exposé dans la revendication 5, dans lequel
ladite portion formant plaque externe a de plus une portion formant corps ;
ladite première portion de mise en prise comprend un bossage fixe formé sur ladite portion formant corps ;
ladite deuxième portion de mise en prise comprend un alésage de mise en prise ; et
ledit élément de mise en prise comprend une vis qui est vissée dans ledit alésage de mise en prise et ledit bossage fixe.

7. Le moulinet pour le lancer à l'appât tel qu'exposé dans n'importe quelle revendication précédente, dans lequel
ledit cadre d'attache comprend une paire de portions latérales (22, 23), un élément transversal (24) qui relie ladite paire de portions latérales, et une portion formant patte (25) qui peut être attachée à la canne à pêche.

8. Le moulinet pour le lancer à l'appât tel qu'exposé dans la revendication 7, lorsqu'elle dépend de la revendication 3, dans lequel
ladite deuxième portion de mise en prise est formée sur lesdites portions latérales (22, 23).

9. Le moulinet pour le lancer à l'appât tel qu'exposé dans la revendication 7, lorsqu'elle dépend de la revendication 3, dans lequel ladite deuxième portion de mise en prise est formée sur ledit élément transversal.

10. Le moulinet pour le lancer à l'appât tel qu'exposé dans la revendication 7, dans lequel
ledit élément transversal (24) et ladite paire de portions latérales (22, 23) sont formés en un élément unitaire d'une pièce.

11. Le moulinet pour le lancer à l'appât tel qu'exposé dans n'importe quelle revendication précédente, dans lequel
ladite portion formant plaque externe comprend un premier à un troisième élément formant plaque externe (15, 16, 17).

12. Le moulinet pour le lancer à l'appât tel qu'exposé dans la revendication 11, dans lequel ledit premier élément formant plaque externe (15) a une troisième portion de mise en prise, et
ledit deuxième élément formant plaque externe (16) a une quatrième portion de mise en prise qui met en prise ladite troisième portion de mise en prise pour coupler ledit premier et ledit deuxième élément formant plaque externe (15, 16).

13. Le moulinet pour le lancer à l'appât tel qu'exposé dans la revendication 11 ou la revendication 12, dans lequel
ladite portion formant plaque externe comprend de plus un quatrième élément formant plaque externe (18).

14. Le moulinet pour le lancer à l'appât tel qu'exposé dans n'importe quelle revendication précédente, dans lequel
ladite portion formant plaque externe est réalisée à partir de résine ABS.

15. Le moulinet pour le lancer à l'appât tel qu'exposé dans n'importe quelle revendication précédente, dans lequel
ledit mécanisme d'entraînement de bobine (19) comprend un mécanisme d'embrayage et un mécanisme de résistance (12), ledit mécanisme d'embrayage adoptant de façon opérationnelle soit un état actif, soit un état inactif, ledit mécanisme de résistance (12) permettant de façon restrictive la rotation inverse de ladite bobine (11) lorsque ledit mécanisme d'embrayage est à l'état actif.
